# EUROPEAN PATENT APPLICATION

(11) **EP 4 796 453 A1**
(43) Date of publication of application: **26.08.2026**
(21) Application number: 25194968.1
(22) Date of filing: 08.08.2025
(51) Int. Cl.: B65D 41/04, B65D 41/28, B65D 51/28, B65D 81/38, A47J 41/02, A47J 41/00

(54) **CAP UNIT AND CAPPED CONTAINER**

(30) Priority: 19.02.2025 JP 2025024790
(71) Applicant: Thermos L.L.C., Schaumburg, IL 60173 (US); Thermos K.K., Tsubame-shi, Niigata-ken (JP)
(72) Inventor: MURATA, Takeshi, Niigata-ken (JP)
(74) Representative: Barker Brettell LLP

(57) **Abstract**

A cap unit including a cap main body 8 which closes an upper opening part 2d of a container main body 2, the cap main body 8 including: an outer lid 9 having a female threaded part 12 on an inner circumferential part which is attached in a state covering the upper opening part 2d of the container main body 2 by screwing together a male threaded part 6 and the female threaded part 12; an inner plug 10 which is fitted inside the container main body 2 from the upper opening part 2d; and an attaching and detaching mechanism 11A which removably attaches the inner plug 10 to the inner lower surface of the outer lid 9; the attaching and detaching mechanism 11A having an engaging part 16 provided on either the outer lid 9 or the inner plug 10 and an engaged part 17 provided on the other, the engaging part 16 engaging with the engaged part 17, whereby the inner plug 10 is removably attached to the lower surface of the inside of the outer lid 9.

## Description

### TECHINICAL FIELD

The present invention relates to a cap unit and a capped container.

### CONVENTIONAL TECHNOLOGY

Conventionally, there have been capped containers with a cap unit that can be detachably attached to a container main body open on an upper part.

Furthermore, some capped containers are equipped with a cap unit that has an outer lid that covers the opening neck part of the container main body, and an inner plug that is fitted into the inside of the container main body from the upper opening part, with the outer lid or inner plug being attached to the container main body by screwing.

Incidentally, in the case of the aforementioned capped container, when cleaning the cap unit that has been removed from the container main body, if the outer lid and inner plug are integrated by welding or the like and cannot be disassembled, the gap between the outer lid and inner plug is narrow and a cleaning sponge cannot be inserted, making cleaning very difficult (see, for example, Patent Document 1 below). For this reason, cap units are constructed such that the outer lid and inner plug are detachable to improve washability (see, for example, Patent Documents 2 and 3 listed below).

Specifically, Patent Document 1 discloses a cap unit having an opening part at an upper part of a container main body having a female threaded part on the inside, an inner plug having a male threaded part that is fitted into and screwed into the opening part, and an outer lid that covers the outside of the inner plug and is placed on the outside of the upper part of the container main body, wherein the inner plug and the outer lid are integrated and cannot be disassembled.

Furthermore, Patent Document 2 listed below discloses a cap unit which includes an outer lid which surrounds the opening neck part of a container main body and which has a female threaded part on the inside of an upper opening part, and an inner plug which has a male threaded part which is fitted into and screwed to the inside of the container main body from the upper opening part of the container main body, the outer lid and the inner plug being detachable, and the inner plug being attached to the outer lid by abutting the upper surface of the inner plug at a position offset from the inner lower surface center part of the outer lid, and then sliding the inner plug towards the inner lower surface center part of the outer lid.

Furthermore, the following Patent Document 3 discloses a cap unit containing an outer lid that surrounds the opening neck part of a container main body having a female threaded part on the inside, and an inner plug having a male threaded part that is fitted into and screwed onto the inside of the container main body from the upper opening part of the container main body, the outer lid and the inner plug being detachable, and the inner plug being attached to the outer lid by inserting the inner plug from above into the opening part provided at an upper part of the outer lid and bringing a flange part that protrudes in the radial expansion direction from an outer circumferential part of the upper end side of the inner plug into contact with the periphery of the opening part of the outer lid.

### RELATED ART DOCUMENTS

### [Patent Documents]

Patent Document 1: Japanese Patent 7522509
Patent Document 2: Japanese Unexamined Patent Application Publication 2023-147140
Patent Document 3: Japanese Unexamined Patent Application Publication 2023-146507

### SUMMARY OF THE INVENTION

### PROBLEM TO BE SOLVED BY THE INVENTION

However, in the invention described in Patent Document 2, when attaching the inner plug to the inner lower surface center part of the outer lid, the inner plug is slid linearly toward the center part of the outer lid, so the sliding direction of the inner plug relative to the outer lid must be limited, and the direction must be adjusted first and then the attachment operation must be performed. In addition, two actions are required: first, the upper surface of the inner plug is placed against a position offset from the inner lower surface center part of the outer lid, and then the inner plug is slid toward the inner lower surface center part of the outer lid (three actions if the direction adjustment is also included). In addition, the hole shapes such as an engagement hole or slide locking part are provided in the outer lid, so a portion of the inner plug is visible from the outside, which also results in a poor design.

Furthermore, in the invention described in Patent Document 3, the outer lid is ring-shaped with an opening part on the upper part, and is therefore prone to distortion during molding. Furthermore, the inner plug side has a top surface part and is inserted into the ring-shaped outer lid from above so as to be integrated, so the boundary between the outer lid and the inner plug is noticeable, and the outside is obviously made of two parts, resulting in poor design properties. In addition, when inserting the inner plug into the outer lid from above, two actions are required: aligning to a position where insertion is possible, and then performing the operation.

For this reason, there is a demand for a structure in which the outer lid and the inner plug are detachable, while further simplifying the operation for attaching and detaching the inner plug from the outer lid, and further improving the design properties.

In light of the forgoing, an object of the present invention is to provide a cap unit that simplifies the structure for attaching and detaching the inner plug from the outer lid, improves the cleanability of the outer lid and inner plug, and has an improved design properties that prevents the inner plug from being visible when the cap unit is attached to the container main body, as well as a capped container that, by being equipped with such a cap unit, allows for further improved usability.

### MEANS FOR SOLVING THE PROBLEM

In order to achieve the above objectives, the present invention provides the following means.
[1] A cap unit detachably attached to a container main body that is open at an upper part and has a male threaded part on an outer circumferential surface, wherein a cap main body is provided to close an upper opening part of the container main body; the cap main body includes: an outer lid having a female threaded part on an inner circumferential part, and that is attached to the container main body in a state that covers the upper opening part by screwing the male threaded part and the female threaded part together;
   an inner plug that fits inside the container main body from the upper opening part; and an attaching and detaching mechanism for removably attaching the inner plug to the inner lower surface of the outer lid; the attaching and detaching mechanism having an engaging part provided on either one of the outer lid or the inner plug, and an engaged part provided on the other, and the inner plug being removably attached to the inner lower surface of the outer lid by engaging the engaging part with the engaged part.
[2] The cap unit according to the aforementioned [1], wherein the attaching and detaching mechanism is in a condition where the engaging part engages with the engaged part by rotating the inner plug about an axis relative to the inner lower surface of the outer lid.
[3] The cap unit according to the aforementioned [1], wherein the engaging part includes a plurality of engagement recessed parts provided in the periphery of the inner lower surface of the outer lid, the engaged part includes a plurality of engagement protruding parts provided on the outer circumferential part of the inner plug, and the inner plug is attached to the outer lid by engaging the engagement protruding parts with the engagement recessed parts.
[4] The cap unit according to the aforementioned [1], further comprising a retaining mechanism for retaining a state where an upper surface of the inner plug is in abutment with the inner lower surface of the outer lid.
[5] The cap unit according to the aforementioned [4], wherein the retaining mechanism includes a magnet provided on one of the outer lid and the inner plug, and a magnet or a magnetic body provided on the other; and the upper surface of the inner plug is kept in a state of contact with the inner lower surface of the outer lid by a magnetic attraction force acting between the outer lid and the inner plug.
[6] The cap unit according to the aforementioned [4], wherein the retaining mechanism includes a plurality of plungers provided in the periphery of the inner lower surface of the outer lid, and a flange part protruding in a radial expansion direction from an outer circumferential part on an upper end side of the inner plug; and the flange part is engaged between the inner lower surface of the outer lid and the plurality of plungers, thereby maintaining the upper surface of the inner plug in contact against the inner lower surface of the outer lid.
[7] The cap unit according to the aforementioned [4], wherein the retaining mechanism includes a plurality of elastic protruding parts provided in the periphery of the inner lower surface of the outer lid, and a flange part protruding in a radial expansion direction from an outer circumferential part of an upper end side of the inner plug; and the elastic protruding part is engaged between the inner lower surface of the outer lid and the plurality of plungers, thereby maintaining the upper surface of the inner plug in contact against the inner lower surface of the outer lid.
[8] A capped container, including: the cap unit according to any one of the aforementioned [1] to [7], and a container main body to which the cap unit is attached.

### EFFECT OF THE INVENTION

As described above, the present invention provides: a cap unit which simplifies the structure for attaching and detaching the inner plug from the outer lid, improves the cleanability of the outer lid and inner plug, and also has improved design properties so that the inner plug is not visible when the cap unit is attached to the container main body; and a capped container having such a cap unit for further improved usability.

### BRIEF DESCRIPTION OF THE DRAWINGS

FIG. 1 is a perspective view as viewed from above, depicting an exterior appearance of a capped container provided with a cap unit according to Embodiment 1 of the present invention;
FIG. 2 is a cross-sectional view of the capped container provided with a cap unit taken along line A-A depicted in FIG. 1;
FIG. 3 is a cross-sectional view of the capped container provided with a cap unit taken along line B-B depicted in FIG. 1;
FIG. 4 is a cross-sectional view of the cap unit depicted in FIG. 2;
FIG. 5 is an exploded perspective view of the cap unit depicted in FIG. 4;
FIG. 6 (A) is a perspective view of the outer lid as viewed from below, and (B) is a lower surface view of the outer lid;
FIG. 7 (A) is a perspective view of the inner plug as viewed from above, and (B) is a perspective view of the inner plug as viewed from below;
FIG. 8 (A) is a lower surface view depicting a state before the engaging part engages with the engaged part, and (B) is a lower surface view depicting a state after the engaging part has engaged with the engaged part;
FIG. 9 (A) is a cross-sectional perspective view depicting a state before the engaging part engages with the engaged part, and (B) is a cross-sectional perspective view depicting a state after the engaging part has engaged with the engaged part;
FIG. 10 is a cross-sectional view depicting a state in which the inner plug is fit inside from the upper opening part of the container main body;
FIG. 11 is a cross-sectional view depicting a state in which the outer lid is placed over the inner plug fit inward from an upper opening part of the container main body depicted in FIG. 10, and an engaged part is placed on an engaging part;
FIG. 12 is a cross-sectional view depicting a state in which the inner lower surface of the outer lid is in abutment with the upper surface of the inner plug that is fit inside from the upper opening part of the container main body depicted in FIG. 10, and the inner plug is attached to the outer lid;
FIG. 13 is a cross-sectional view of a cap unit according to embodiment 2 of the present invention;
FIG. 14 is a perspective view of an outer lid provided in the cap unit depicted in FIG. 13, viewed from the inside;
FIG. 15 is a cross-sectional view of a cap unit according to embodiment 3 of the present invention; and
FIG. 16 is a perspective view of an outer lid provided in the cap unit depicted in FIG. 15, viewed from the inside.

### DESCRIPTION OF THE PREFERRED EMBODIMENTS

The following is a detailed description of the embodiment of the present invention with reference to the drawings.

### Embodiment 1

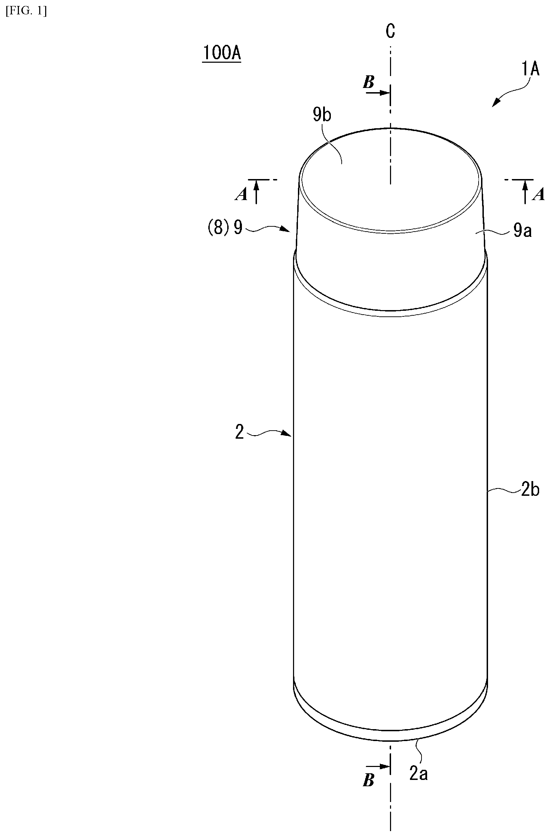

First, a capped container 100A provided with a cap unit 1A as depicted in FIG. 1 to FIG. 12 will be described as Embodiment 1 of the present invention.

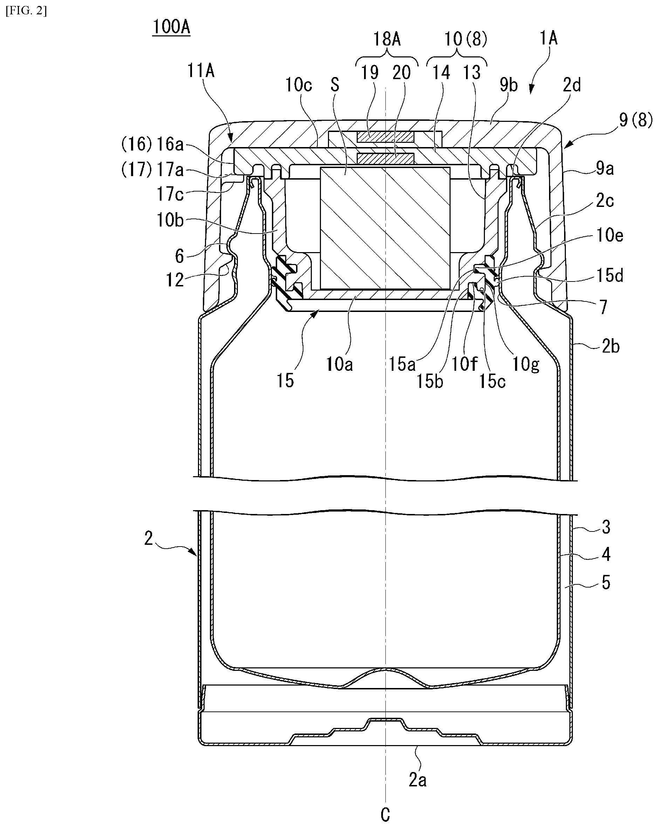

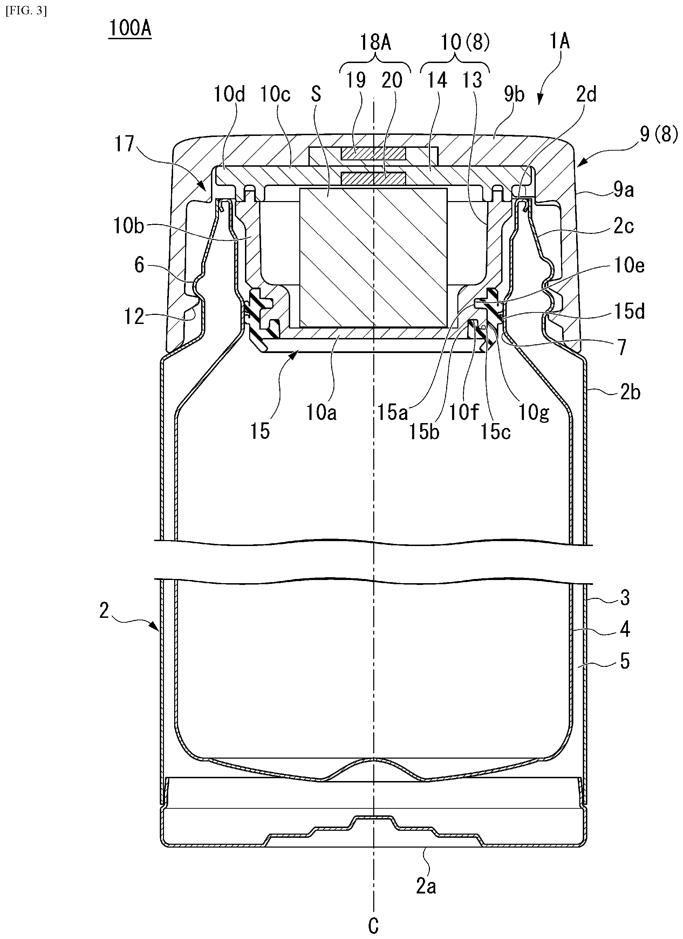

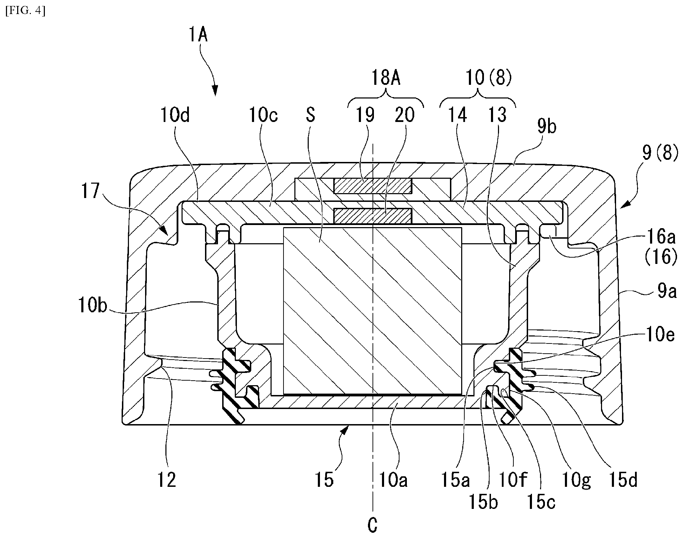

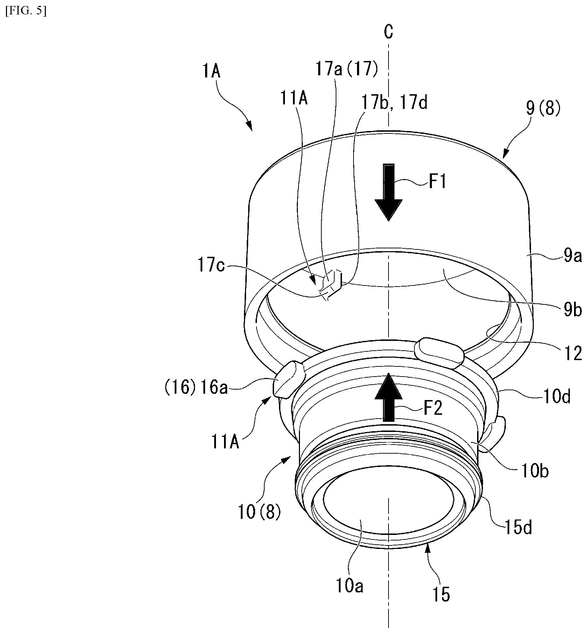

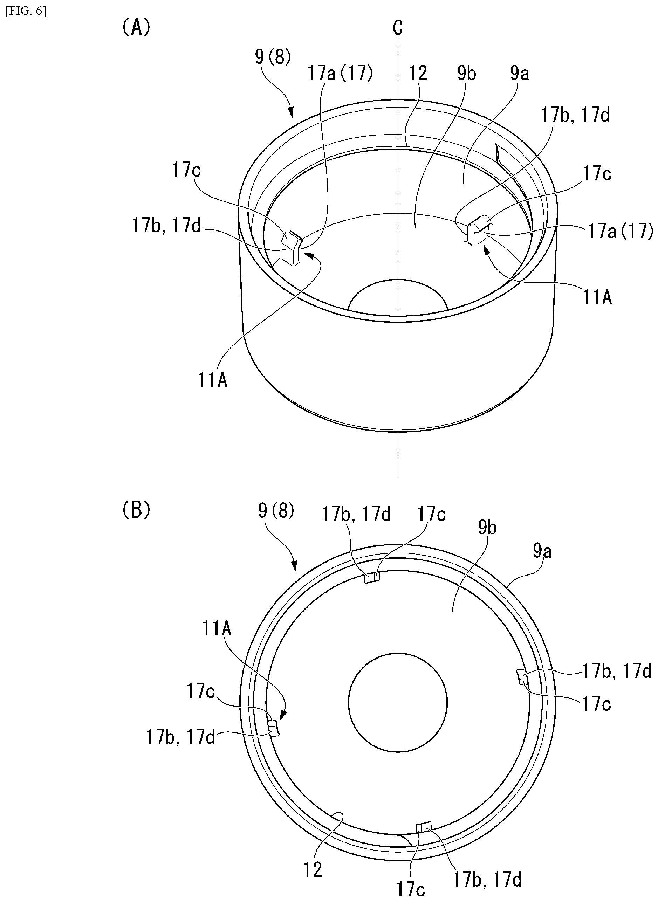

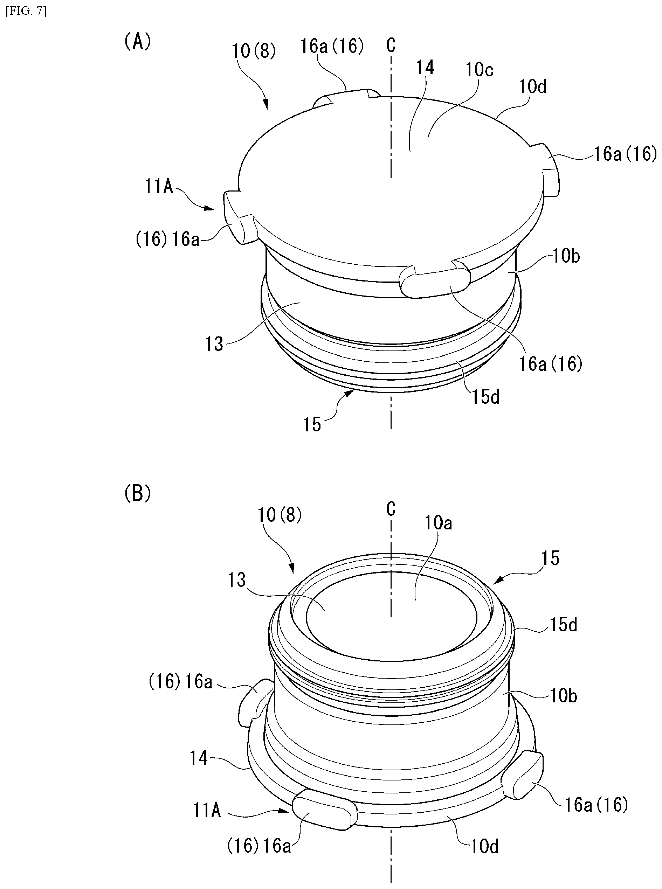

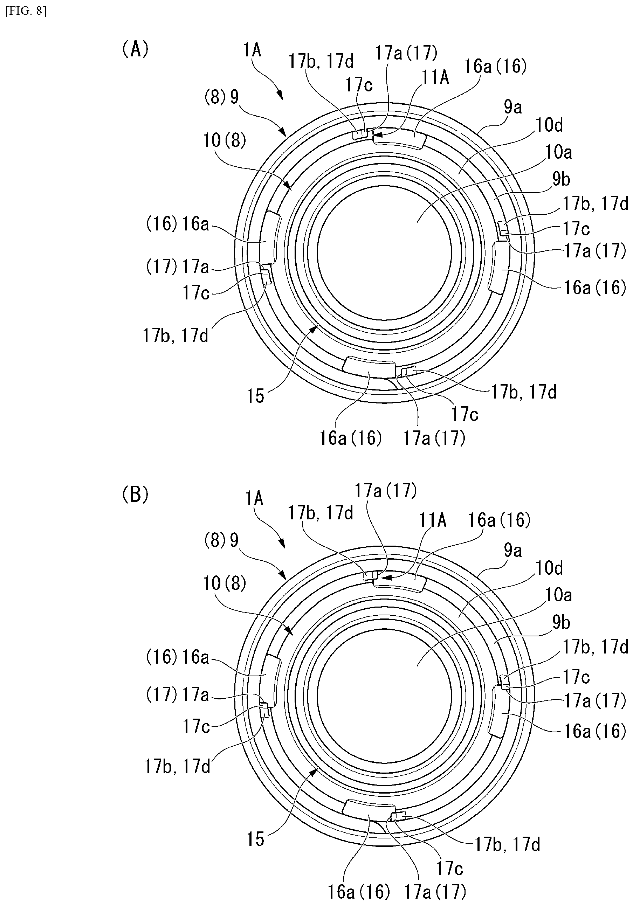

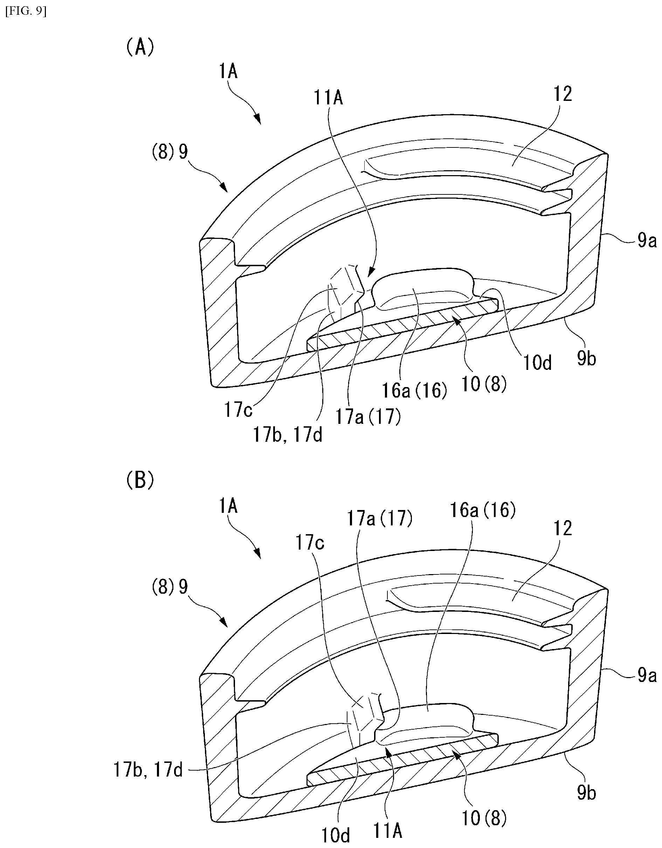

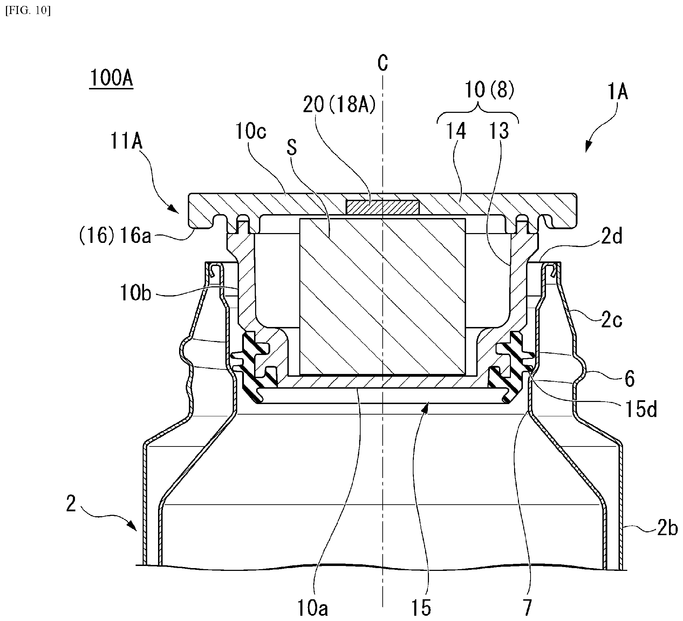

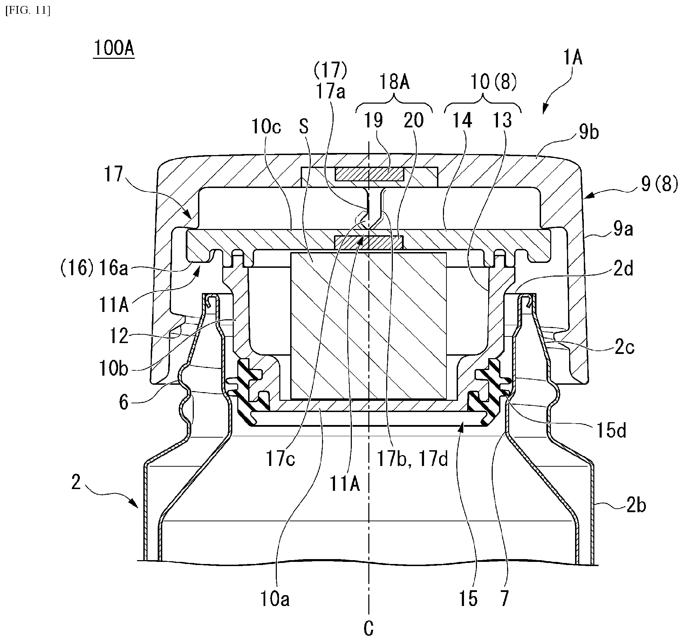

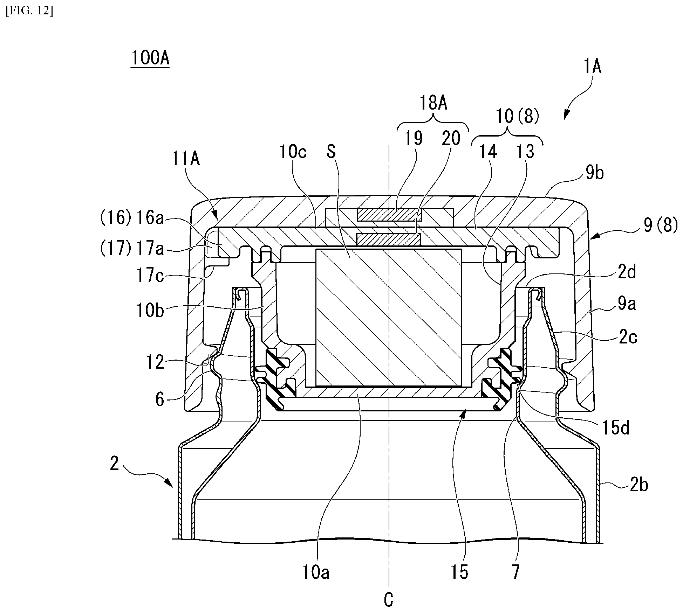

Note that FIG. 1 is a perspective view depicting the external appearance of the capped container 100A provided with the cap unit 1A, as viewed from above. FIG. 2 is a cross-sectional view of the capped container 100A provided with a cap unit 1A taken along line A-A depicted in FIG. 1. FIG. 3 is a cross-sectional view of the capped container 100A provided with a cap unit 1A taken along line B-B depicted in FIG. 1. FIG. 4 is a cross-sectional view of the cap unit 1A. FIG. 5 is an exploded perspective view of the cap unit 1A. FIG. 6(A) is a perspective view of the outer lid 9 as viewed from below. FIG. 6(B) is a lower surface view of the outer lid 9. FIG. 7(A) is a perspective view of the inner plug 10 as viewed from above. FIG. 7(B) is a perspective view of the inner plug as viewed from below. FIG. 8(A) is a lower surface view depicting a state before the inner plug 10 is attached to the outer lid 9. FIG. 8(B) is a lower surface view depicting a state in which the inner plug 10 is attached to the outer lid 9. FIG. 9A is a cross-sectional perspective view depicting a state before the engaging part 16 is engaged with the engaged part 17. FIG. 9B is a cross-sectional perspective view depicting a state in which the engaging part 16 is engaged with the engaged part 17. FIG. 10 is a cross-sectional view depicting a state in which the inner plug 10 is fit into the container main body 2 from the upper opening part 2d. FIG. 11 is a cross-sectional view depicting a state in which the outer lid 9 is placed over the inner plug 10 fit inward from an upper opening part 2d of the container main body 2, and an engaged part 17 is placed on an engaging part 16. FIG. 12 is a cross-sectional view depicting a state in which the inner lower surface of the outer lid 9 is abutted against the upper surface of the inner plug 10 fitted inward from the upper opening part 2d of the container main body 2, and the inner plug 10 is attached to the outer lid 9.

As depicted in FIG. 1 to FIG. 3, the capped container 100A of the present embodiment has a cap unit 1A of the present embodiment and a container main body 2 to which the cap unit 1A is detachably attached.

Note that in the following descriptions, the direction in which the center axis C of the cap units 1A, 1B, and 1C extends is referred to as the vertical direction, and in the vertical direction, the side in which the cap unit 1A is located relative to the container main body 2 is referred to as the "upper side", and the direction in which the container main body 2 is located relative to the cap unit 1A is referred to as the "lower side". In addition, the direction perpendicular to the center axis C is referred to as the radial direction, and in the radial direction, the direction approaching the center axis C is referred to as the radial contraction direction, radially inward, or simply inward, and the direction away from the center axis C is referred to as the radial expansion direction, radially outward, or simply outward. Furthermore, the direction traveling around the center axis C is defined as the circumferential direction.

The capped container 100A is a beverage container that can keep beverages (liquids) contained in the container main body 2 cool or warm by means of the container main body 2 having a vacuum insulation structure.

Specifically, the container main body 2 is configured as a double structure having a cylindrical outer container with an outer container 3 and an inner container 4 made of, for example, stainless steel that are mutually joined at the periphery of the opening part in a state where the inner container 4 is stored inside the outer container 3.

Furthermore, a vacuum insulating layer 5 is provided between the outer container 3 and the inner container 4. The vacuum insulating layer 5 can be formed, for example, by plugging the degassing hole on the bottom of the outer container 3 in a chamber that has been depressurized (evacuated) to a high vacuum.

The container main body 2 has a substantially circular bottom part 2a, a substantially cylindrical trunk part 2b rising from the outer circumference of the bottom part 2a, and a substantially cylindrical opening neck part 2c that is reduced in diameter at the upper part side of the trunk part 2b.

An upper end part of the opening neck part 2c is opened in a circular shape as an upper opening part 2d of the container main body 2A. Furthermore, the inner circumferential surface of the opening neck part 2c (upper part side of the trunk part 2b) is smaller in diameter than the inner circumferential surface of the trunk part 2b.

A male threaded part 6 is provided on the outer circumferential surface of the opening neck part 2c. Meanwhile, a ring-shaped protruding part 7 is provided protruding around the entire periphery on the lower side of the inner circumferential surface of the opening neck part 2c.

Note that although the capped container 100A of the present embodiment has a substantially cylindrical external shape as a whole, the external shape of the capped container 100A is not limited to any particular shape, and can be modified in size and design. Furthermore, the outer circumferential surface of the container main body 2 (outer container 3) may be painted, printed, or the like.

The cap unit 1A of the present embodiment constitutes a lid body that opens and closes the upper opening part 2d of the container main body 2. Specifically, as depicted in FIGS. 1 to 5, the cap unit 1A has a cap main body 8 that closes the upper opening part 2d of the container main body 2 when fit inside the container main body 2 from the upper opening part 2d of the container main body 2, and has a structure in which the cap main body 8 is attached to the container main body 2 by screwing.

The cap main body 8 has an outer lid 9 that covers the upper opening part 2d of the container main body 2, an inner plug 10 that fits into the inside of the container main body 2 from the upper opening part 2d, and an attaching and detaching mechanism 11A that attaches the inner plug 10 to the inner lower surface of the outer lid 9 in a freely detachable manner.

As depicted in FIGS. 1 to 6, the outer lid 9 is made of, for example, a heat-resistant resin, and has a circumferential wall part 9a formed in an approximately cylindrical shape so that the appearance is contiguous with the trunk part 2b of the container main body 2, and an upper wall part 9b that closes the entire upper outer circumferential part of the circumferential wall part 9a. Furthermore, a female threaded part 12 is provided on the inner circumferential surface of the circumferential wall part 9a (outer lid 9).

In the capped container 100A of the present embodiment, the cap main body 8 (cap unit 1A) is detachably attached to the container main body 2 by screwing the male threaded part 6 into the female threaded part 12.

Furthermore, the male threaded part 6 and the female threaded part 12 are mutually complementary. When using double start threads, the cap body 8 (cap unit 1A) can be attached to and detached from the container main body 2 with a smaller number of rotational operations (approximately 180° in the present embodiment).

As depicted in FIGS. 2 to 5 and 7, the inner plug 10 is made of, for example, a heat-resistant resin, and has a substantially circular bottom wall part 10a, a substantially cylindrical circumferential wall part 10b rising from the periphery of the bottom wall part 10a, a top wall part 10c closing the upper part of the circumferential wall part 10b, and a flange part 10d which protrudes from the top wall part 10c in the radial expansion direction over the entire periphery thereof beyond the circumferential wall part 10b.

The inner plug 10 has a bottomed, approximately cylindrical lower plug member 13 which forms the bottom wall part 10a and the circumferential wall part 10b, and an approximately circular upper plug member 14 which forms the top wall part 10c and the flange part 10d, and is configured such that the upper part of the lower plug member 13 is integrally attached to the lower surface of the upper plug member 14 by welding or the like.

Furthermore, a heat insulating material S made of, for example, urethane foam resin or the like is provided on the inside of the inner plug 10 as a heat insulating layer. Moreover, the heat insulating layer may be air (a void) instead of the heat insulating material S described above.

Watertight packing 15 is integrally attached to the outer circumferential part of the lower end of the inner plug 10. The watertight packing 15 is a ring-shaped sealing member that seals between the protruding part 7 of the container main body 2 and the inner plug 10, and is made of, for example, a heat resistant rubber such as silicone rubber or an elastic member such as an elastomer, or the like. The watertight packing 15 is formed integrally with the inner plug 10 by insert molding.

The inner plug 10 has a first protruding part 15a protruding inward from the upper side on the inner circumferential side of the watertight packing 15, a first recessed part 10e having a shape corresponding to the first protruding part 15a, a second protruding part 15b protruding upward from the lower side of the inner circumferential side of the watertight packing 15, and a second recessed part 10f having a shape corresponding to the second protruding part 15b. In addition, the inner plug 10 has a third recessed part 15c of the watertight packing 15 located between the first protruding part 15a and the second protruding part 15b of the watertight packing 15 and formed between the first recessed part 10e and the second recessed part 10f of the inner plug 10, and a third protruding part 10g having a shape corresponding to the third recessed part 15c.

In the cap unit 1A of the present embodiment, a first protruding part 15a protruding toward the inside of the watertight packing 15 is formed integrally with a first recessed part 10e of the inner plug 10, and a second protruding part 15b protruding toward the upper side of the watertight packing 15 is formed integrally with a second recessed part 10f of the inner plug 10. Furthermore, by forming the third recessed part 15c of the watertight packing 15 and the third protruding part 10g of the inner plug 10 as a single unit, the surface area of contact therebetween is increased, and the adhesive strength of the watertight packing 15, which is attached integrally to the inner plug 10 (cap main body 8), can be increased by an anchoring effect.

Furthermore, two elastic flange parts 15d are provided on the outer circumference of the watertight packing 15, protruding in the radial expansion direction. When the cap main body 8 (cap unit 1A) is attached to the container main body 2, the watertight packing 15 adheres to the protruding part 7 of the container main body 2 over the entire circumference thereof while the elastic flange part 15d is elastically deformed. Thereby sealing (to stop water) can be achieved between the protruding part 7 (container main body 2) and the inner plug 10 (cap main body 8).

Note that the watertight packing 15 is not necessarily limited to the shape described above. For example, the number of elastic flange parts 15d is not limited to the two described above, but can be one or a plurality.

Furthermore, the watertight packing 15 is not necessarily limited to the configuration in which the elastic flange part 15d is provided as described above, and the shape and the like thereof can be modified as necessary. For example, the seal packing 15 may be configured with an elastic flange part having a shape that protrudes while curving downward from the upper end of the outer circumference of the watertight packing.

Furthermore, the watertight packing 15 is not necessarily limited to a configuration that is integrally attached to the outer circumferential part of the lower end side of the inner plug 10 described above, but may also be configured to be freely attached and detached to the outer circumferential part of the lower end side of the inner plug 10.

**In** the case of this configuration, the watertight packing 15 can be removed from the outer circumferential part of the lower end side of the inner plug 10 by elastically deforming (pulling and stretching) the watertight packing 15. Thereby the inner plug 10 (cap main body 8) and the watertight packing 15 can be cleaned separately, and the watertight packing 15 and the inner plug 10 can be kept hygienic.

Specifically, as depicted in FIG. 2 to FIG. 9, the attaching and detaching mechanism 11A has an engaging part 16 provided on either the outer lid 9 or the inner plug 10 (in the present embodiment, the inner plug 10), and an engaged part 17 provided on the other (in the present embodiment, the outer lid 9).

The engaging part 16 has a plurality of (four in the present embodiment) engagement protruding parts 16a provided on the outer circumferential part of the inner plug 10. The four engagement protruding parts 16a are arranged at equal intervals in the circumferential direction of the inner plug 10. Each of the engagement protruding parts 16a protrudes in the radial expansion direction from the outer circumferential part of the flange part 10d, and the protruding part is formed so as to protrude downward beyond the lower surface of the flange part 10d.

The engaged part 17 has a plurality of (four in the present embodiment) engagement recessed parts 17a provided on the inside of the outer lid 9. The four engagement recessed parts 17a are arranged at equal intervals (each being a quarter of the circumference) in the circumferential direction of the outer lid 9. Each engagement recessed part 17a is formed on one side by a rib wall 17b that protrudes downward from the inner lower surface of the upper wall part 9b along the inner circumferential surface of the circumferential wall part 9a, and an engagement tab part 17c that extends contiguously from the tip (lower end) side of the rib wall 17b in a bent "L" shape toward one side in the circumferential direction. Furthermore, the surface of the rib wall 17b opposite to the engagement recessed part 17a (opposing side) serves as an abutment surface 17d.

In the attaching and detaching mechanism 11A, as depicted in FIGS. 8(A) and 9(A), the upper surface of the inner plug 10 (top wall part 10c) is abutted against the inner lower surface center part of the outer lid 9 (upper wall part 9b). At this time, the plurality of engagement protruding parts 16a are positioned between adjacent engagement recessed parts 17a in the circumferential direction.

From this state, as depicted in FIGS. 8(A) and 9(A), by rotating the inner plug 10 about the axis toward the engagement side (counterclockwise in the lower surface view of FIG. 8(A) in the present embodiment) relative to the inner lower surface center part of the outer lid 9, one end side in the circumferential direction of each of the plurality of engagement protruding parts 16a (engaging part 16) is engaged with each of the plurality of engagement recessed parts 17a (engaged parts 17).

Specifically, as depicted in FIGS. 8(B) and 9(B), the tip end side of the engagement tab part 17c, which bends and extends toward one circumferential side, enters the lower side (upper side in FIG. 9(B)) of one end side in the circumferential direction of the engagement protruding part 16a (engaging part 16), and one end side in the circumferential direction of the plurality of engagement protruding parts 16a (engaging part 16) is respectively engaged with the plurality of engagement recessed parts 17a (engaged parts 17). This allows the inner plug 10 to be detachably attached to the inner lower surface center part of the outer lid 9 by the attaching and detaching mechanism 11A.

In addition, the cap unit 1A of the present embodiment is equipped with a retaining mechanism 18A that keeps the upper surface of the inner plug 10 (top wall part 10c) in abutment against the inner lower surface center part of the outer lid 9 (upper wall part 9b), as depicted in FIGS. 2 to 4 and 10 to 12.

The retaining mechanism 18A has a disk-shaped first magnet 19 provided on the outer lid 9 side, and a disk-shaped second magnet 20 provided on the inner plug 10 side.

The first magnet 19 is located at the center part of the upper wall part 9b and is molded integrally with the outer lid 9, so that the first magnet 19 is disposed in a state embedded in the resin that forms the outer lid 9.

The second magnet 20 is located in the center part of the top wall part 10c and is integrally molded with the upper plug member 14 that constitutes the inner plug 10, and is disposed in a state embedded in the resin that forms the upper plug member 14.

Note that in addition, the first and second magnets 19, 20 are not limited to being integrally molded with the outer lid 9 and upper plug member 14 (inner plug 10), but may be arranged inside a recessed part formed in the upper wall part 9b and the top wall part 10c, with a magnetically permeable cover closing the recessed part.

In the retaining mechanism 18A, the magnetic attraction force acting between the first magnet 19 and the second magnet 20 enables holding the upper surface of the inner plug 10 (top wall part 10c) in abutment with the inner lower surface center part of the outer lid 9 (upper wall part 9b) with the center axes of the outer lid 9 and the inner plug 10 aligned.

Note that in the present embodiment, the retaining mechanism 18A is configured such that the magnets 19, 20 are arranged on both the outer lid 9 and the inner plug 10, but the magnets can be provided on either the outer lid 9 or the inner plug 10 and a magnetic body provided on the other, such that the magnetic body is magnetically attracted to the magnet.

In the capped container 100A of the present embodiment having the aforementioned configuration, the inner plug 10 fits inside the container main body 2 from the upper opening part 2d, and then the outer lid 9 (cap main body 8) can be rotated clockwise (hereinafter referred to as the "closing direction") when viewed from above relative to the container main body 2, thereby attaching the cap main body 8 (cap unit 1A) to the container main body 2 by screwing the male threaded part 6 and the female threaded part 12 together.

On the other hand, when the cap main body 8 (cap unit 1A) is attached to the container main body 2, the outer lid 9 (cap main body 8) can be rotated counterclockwise when viewed from above (hereinafter referred to as the "opening direction") relative to the container main body 2 to release the screw engagement between the female threaded part 6 and the male threaded part 12, and thus the cap main body 8 (capped unit 1A) can be removed from the container main body 2.

In the cap unit 1A of the present embodiment, the outer lid 9 and the inner plug 10 that constitute the cap main body 8 are made detachable by the aforementioned attaching and detaching mechanism 11A and retaining mechanism 18A, such that the outer lid 9 and the inner plug 10 can be washed separately, and the space between the outer lid 9 and the inner plug 10 can be kept hygienic. Furthermore, the outer lid 9 and the inner plug 10 can be separated, and therefore can be easily dried, and moisture can be easily wiped off.

In addition, the cap unit 1A of the present embodiment has a simplified structure for attaching and detaching the inner plug 10 to the outer lid 9 due to the aforementioned attaching and detaching mechanism 11A and the retaining mechanism 18A, and the cap main body 8 can be easily attached to the container main body 2.

Specifically, when attaching the cap unit 1A to the container main body 2, the inner plug 10 is fit into the inside of the container main body 2 from the upper opening part 2d of the container main body 2 as depicted in FIG. 10. From this state, as depicted in FIG. 5, the outer lid 9 (cap main body 8) is moved in the direction of arrow F1 to cover the inner plug 10, and the outer lid 9 (cap main body 8) is rotated in the closing direction (clockwise when viewed from above) relative to the container main body 2.

At this time, in the retaining mechanism 18A, instead of the state in which the engagement recessed part 17a of the outer lid 9 is placed on the engagement protruding part 16a of the inner plug 10 as depicted in FIG. 11, the plurality of engagement protruding parts 16a are positioned between adjacent engagement recessed parts 17a in the circumferential direction as depicted in FIGS. 8 (A) and 9 (A), such that the magnetic attraction force acting between the first magnet 19 and the second magnet 20 causes the inner lower surface center part of the outer lid 9 (upper wall part 9b) to abut against the upper surface of the inner plug 10 (top wall part 10c) that is fitted inward from the upper opening part 2d of the container main body 2. Similarly, the magnetic attraction force acting between the first magnet 19 and the second magnet 20 keeps the upper surface of the inner plug 10 in abutment with the inner lower surface center part of the outer lid 9.

Furthermore, even when the outer lid 9 and the inner plug 10 are slightly separated from each other, the magnetic attraction force described above causes the upper surface of the inner plug 10 to abut against the inner lower surface center part of the outer lid 9. Thereby the operation can be made semi-automatic and simple, and the device is comfortable to use. In addition, since the plurality of engagement protruding parts 16a are positioned between adjacent engagement recessed parts 17a in the circumferential direction, the installation operation can be performed simply by bringing the upper surface of the inner plug 10 close to the inner lower surface center part of the outer lid 9. This is convenient because the attachment position of the inner plug 10 does not need to be adjusted relative to the outer lid 9, and there is no need to worry about the direction.

Herein, a case will be described in which, although unlikely, the engagement recessed part 17a of the outer lid 9 is unintentionally placed on the engagement protruding part 16a of the inner plug 10 as depicted in FIG. 11. In this case, the inner plug 10 can be used prior to attachment to the outer lid 9 or the container main body 2, and by rotating one relative to the other in either circumferential direction, a state can easily be achieved in which the plurality of engagement protruding parts 16a are positioned between adjacent engagement recessed parts 17a in the circumferential direction, as depicted in FIGS. 8(A) and 9(A). The rotation direction may be either circumferential direction, so processes such as alignment are unnecessary and use is simple.

Note that the engagement tab part 17c is bent in a dogleg shape toward one side in the circumferential direction. Therefore, depending on the placement state, when the cap main body 8 is inverted upside down, gravity or the magnetic attraction force acting between the first magnet 19 and the second magnet 20 can automatically position the plurality of engagement protruding parts 16a between adjacent engagement recessed parts 17a in the circumferential direction.

Furthermore, from a state in which the plurality of engagement protruding parts 16a are positioned between adjacent engagement recessed parts 17a in the circumferential direction, the other end side in the circumferential direction of each engagement protruding part 16a can be made to abut against the abutment surface 17d of the rib wall 17b by rotating the outer lid 9 (cap main body 8) covering the inner plug 10 in the closing direction (clockwise when viewed from above) relative to the container main body 2.

From this state, each abutment surface 17d is pressed against the other end side in the circumferential direction of each engagement protruding part 16a in the circumferential direction by further rotating the outer lid 9 that constitutes the cap main body 8 in the closing direction, causing the outer lid 9 and the inner plug 10 to rotate together. As a result, the cap main body 8 is attached to the container main body 2 by screwing the male threaded part 6 into the female threaded part 12, and thus the upper opening part 2d of the container main body 2 can be closed by the cap main body 8 (cap unit 1A).

On the other hand, when removing the cap main body 8 (cap unit 1A) from the container main body 2, the outer lid 9 (cap main body 8) is rotated in the opening direction (counterclockwise when viewed from above) relative to the container main body 2, such that one end side in the circumferential direction of each engagement protruding part 16a is engaged with each engagement recessed part 17a, as depicted in FIGS. 8(B), 9(B) and 12.

Specifically, the tip end side of the engagement tab part 17c, which bends and extends toward one circumferential side, enters the lower side (upper side in FIG. 9(B)) of one end side in the circumferential direction of the engagement protruding part 16a (engaging part 16), and one end side in the circumferential direction of the plurality of engagement protruding parts 16a (engaging part 16) is respectively engaged with the plurality of engagement recessed parts 17a (engaged parts 17).

From this state, each engagement recessed part 17a can be made to press one end side in the circumferential direction of each engagement protruding part 16a in the circumferential direction by further rotating the outer lid 9 and the inner plug 10 that constitute the cap main body 8 together in the opening direction, causing the outer lid 9 and the inner plug 10 to rotate together. This releases the male threaded part 6 from the female threaded part 12, enabling removal of the cap main body 8 (cap unit 1A) as a unit from the container main body 2, so as to open the upper opening part 2d of the container main body 2.

In addition, in the cap unit 1A of the present embodiment, the magnetic attraction force acting between the first magnet 19 and the second magnet 20 keeps the upper surface of the inner plug 10 in abutment with the inner lower surface center part of the outer lid 9, and furthermore, one end side in the circumferential direction of each engagement protruding part 16a is engaged with each engagement recessed part 17a. Thereby, the inner plug 10 can be prevented from falling off from the outer lid 9 when the cap main body 8 (cap unit 1A) is removed from the container main body 2.

In addition, the engagement tab part 17c of each engagement recessed part 17a extends in a dogleg shape from the tip end (lower end) side of the rib wall 17b toward one side in the circumferential direction, such that the tip end side of the engagement tab part 17c penetrates into and engages with the lower side (upper side in FIG. 9 (B)) of one end side in the circumferential direction of each engagement protruding part 16a, thereby rotating the inner plug 10 while lifting upward. Thereby the inner plug 10 is prevented from falling off the outer lid 9 even if negative pressure is created inside the container main body 2, and the inner plug 10 (cap main body 8) will stick to the container main body 2, allowing removal of the cap main body 8 (cap unit 1A) from the container main body 2.

In addition, when the cap unit 1A of the present embodiment is attached to the container main body 2, the circumferential wall part 9a and the upper wall part 9b of the outer lid 9 cover the inner plug 10, such that the inner plug 10 is not visible, and the boundary between the outer lid 9 and the inner plug 10 is also not visible. Therefore, no gap occurs between the outer lid 9 and the inner plug 10 as is the case when resin parts are fitted together, and thus the design properties can be enhanced.

Furthermore, the periphery of outer lid 9 is covered by the circumferential wall part 9a and the top surface part is covered by the upper wall part 9b, so the shape is less likely to be distorted during molding as compared to a ring-shaped part having a cavity in the center part.

Note that in order to remove the inner plug 10 from the outer lid 9, the outer lid 9 can be pulled in the opposite direction as the arrow F1 in FIG. 5 relative to the inner plug 10, or the inner plug 10 can be pulled in the opposite direction as the arrow F2 relative to the outer lid 9, which is a simple operation.

As described above, in the cap unit 1A of the present embodiment, the outer lid 9 and the inner plug 10 are structured to be detachable, the structure for attaching and detaching the inner plug 10 to the outer lid 9 described above is simplified, the operation for attaching and detaching the inner plug 10 to the outer lid 9 is simplified, and the design properties are also improved.

Note that for the cap unit 1A of the present embodiment, an example is depicted of a case in which the cap main body 8 is attached to the container main body 2 by rotating the outer lid 9 (cap main body 8) that is later placed on the inner plug 10 in the closing direction relative to the container main body 2, after only the inner plug 10 is fit inside the container main body 2 from the upper opening part 2d of the container main body 2 as described above. Alternatively, the cap main body 8 can be attached to the container main body 2 by first attaching the inner plug 10 to the outer lid 9 using the aforementioned attaching and detaching mechanism 11A and the retaining mechanism 18A, then fitting the inner plug 10 into the inside of the container main body 2 through the upper opening part 2d of the container main body 2, and rotating the outer lid 9 (cap main body 8) in the closing direction relative to the container main body 2.

Moreover, this operation is simple and similar to the above operation. In other words, as depicted by arrow F2 in FIG. 5, first, the upper surface of the inner plug 10 is brought close to the inner lower surface center part of the outer lid 9 so that the plurality of engagement protruding parts 16a of the inner plug 10 are positioned between adjacent engagement recessed parts 17a of the outer lid 9 in the circumferential direction. Thereby the attachment operation can be performed simply by bringing the inner plug 10 close to the outer lid 9, thus simplifying the operation.

In addition, with the cap unit 1A of the present embodiment, one end side in the circumferential direction of each engagement protruding part 16a is engaged with each engagement recessed part 17a by rotating the inner plug 10 about the axis toward the engagement side (counterclockwise when viewed from below in FIG. 8 (A)) relative to the inner lower surface center part of the outer lid 9 described above. Conversely, the inner plug 10 may be initially rotated in the opposite direction about the axis (clockwise when viewed from below in FIG. 8 (A)) relative to the inner lower surface center part of the outer lid 9, so that the other end side in the circumferential direction of each engagement protruding part 16a engages with each engagement recessed part 17a.

With this configuration, when removing the cap main body 8 (cap unit 1A) from the container main body 2, the outer lid 9 (cap main body 8) is rotated in the opening direction (counterclockwise when viewed from above) relative to the container main body 2, such that one end side in the circumferential direction of the engagement protruding part 16a abuts against the abutment surface 17d of the rib wall 17b that forms the engagement recessed part 17a.

Furthermore, from this state, each abutment surface 17d can be made to press one end side in the circumferential direction of each engagement protruding part 16a in the circumferential direction by further rotating the outer lid 9 and the inner plug 10 that constitute the cap main body 8 together in the opening direction, causing the outer lid 9 and the inner plug 10 to rotate together. As a result, the male threaded part 6 and the female threaded part 12 are disengaged from each other.

Here, the magnetic attraction force of the retaining mechanism 18A keeps the upper surface of the inner plug 10 (top wall part 10c) in abutment with the inner lower surface center part of the outer lid 9 (upper wall part 9b). Therefore, the cap main body 8 (cap unit 1A) can be removed from the container main body 2 as a unit and the upper opening part 2d of the container main body 2 can be opened.

In addition, with the cap unit 1A of the present embodiment, a male threaded part 6 is provided on the outer circumferential surface of the opening neck part 2c of the container main body 2, and a female threaded part 12 is provided on the inner circumferential surface of the circumferential wall part 9a of the outer lid 9, and the cap main body 8 (cap unit 1A) is freely attached and detached to the container main body 2 by screwing together the male threaded part 6 and the female threaded part 12.

Herein, a case is described where the male threaded part and the female threaded part of the cap unit 1A of the present embodiment are interchanged, such that the female threaded part is provided on the inside of the upper opening part 2d of the container main body 2, and the male threaded part is provided on the circumferential wall part 10b of the inner plug 10.

Furthermore, as another example, assume that the capped container 100A is lifted by gripping the outer lid 9. In this case, there is a possibility that the capped container 100A can be lifted by the attaching and detaching mechanism 11A and the retaining mechanism 18A by slowly lifting vertically (upward).

On the other hand, when comparing the combined tensile strength in the vertical direction of the attaching and detaching mechanism 11A and the retaining mechanism 18A with the tensile strength of the male threaded part 6 and the female threaded part 12 screwed together, the latter is clearly stronger.

The attaching and detaching mechanism 11A is a mechanism for rotating the outer lid 9 and the inner plug 10 together while lifting the inner plug 10 upward when the cap main body 8 is rotated in the circumferential direction, and is not intended to provide high tensile strength in the vertical (up and down) direction. Furthermore, the retaining mechanism 18A is also a mechanism for allowing the outer lid 9 and the inner plug 10 to be easily attached and detached. If the outer lid 9 and the inner plug 10 are too tightly attached together, separation will be difficult.

For this reason, if the capped container 100A is lifted by grasping the outer lid 9, if the capped container 100A is tilted, or if vibrations are applied, the inner plug 10 can easily separate from the outer lid 9 and the container main body 2 with the inner plug 10 attached can fall, creating a hazard. Usually, the container main body 2 contains a beverage or the like, which increases the weight, and this tendency will be more pronounced.

In addition, when the capped container 100A is carried around in a bag or the like, if an upward force is unintentionally applied to the outer lid 9 inside the bag, it is conceivable that the outer lid 9 may easily separate from the inner plug 10.

In contrast, with the cap unit 1A of the present embodiment, it is important that the outer circumferential surface of the container main body 2 is provided with a male threaded part 6 and the inner circumferential surface of the circumferential wall part 9a of the outer lid 9 is provided with a female threaded part 12. On the other hand, it is substantially impossible to provide a female threaded part on the inside of the upper opening part 2d of the container main body 2 and a male threaded part on the circumferential wall part 10b of the inner plug 10 by swapping the male and female threads.

As described above, with the cap unit 1A of the present embodiment, the structure for attaching and detaching the inner plug 10 to the outer lid 9 is simplified, the ease of cleaning the outer lid 9 and the inner plug 10 is improved, and the design properties are also improved so that the inner plug 10 is not visible when the cap unit 1A is attached to the container main body 2.

Therefore, a capped container 100A including such a cap unit 1A can be made even easier to use.

### Embodiment 2

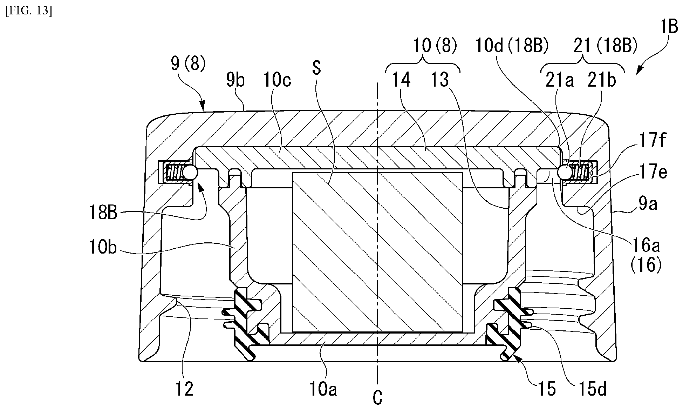

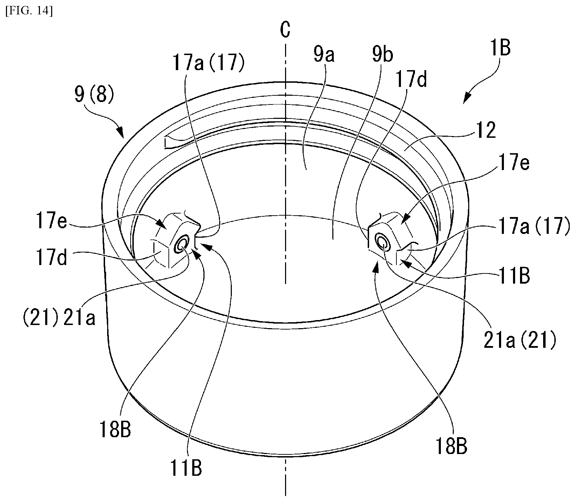

Next, a capped container 100B having the cap unit 1B depicted in, for example, FIGS. 13 and 14 will be described as embodiment 2 of the present invention.

Note that FIG. 13 is a cross-sectional view of the cap unit 1B. FIG. 14 is a perspective view of the outer lid 9 of the cap unit 1B as viewed from the inside. Furthermore, in the following description, the same parts equivalent to the above cap unit 1A shall be omitted and the same symbols shall be used in the drawings.

The cap unit 1B of the present embodiment is detachably attached to the container main body 2 (not depicted) to form a capped container 100B.

Specifically, the cap unit 1B includes attaching and detaching mechanism 11B and retaining mechanism 18B, instead of attaching and detaching mechanism 11A and retaining mechanism 18A, as depicted in FIGS. 13 and 14.

The attaching and detaching mechanism 11B has an engaging part 16 provided on either the outer lid 9 or the inner plug 10 (in the present embodiment, the inner plug 10), and an engaged part 17 provided on the other (in the present embodiment, the outer lid 9).

The engaging part 16 has a plurality of (four in the present embodiment) engagement protruding parts 16a provided on the outer circumferential part of the inner plug 10. The four engagement protruding parts 16a are arranged at equal intervals in the circumferential direction of the inner plug 10. Each of the engagement protruding parts 16a protrudes in the radial expansion direction from the outer circumferential part of the flange part 10d, and the protruding part is formed so as to protrude downward beyond the lower surface of the flange part 10d.

The engaged part 17 has a plurality of (four in the present embodiment) engagement recessed parts 17a provided on the inside of the outer lid 9. The four engagement recessed parts 17a are arranged at equal intervals (each being a quarter of the circumference) in the circumferential direction of the outer lid 9. Each engagement recessed part 17a is formed by recessing one circumferential side of the protruding wall 17e that protrudes downward from the inner lower surface of the upper wall part 9b along the inner circumferential surface of the circumferential wall part 9a. Furthermore, the surface of the protruding wall 17e opposite to the engagement recessed part 17a (opposing side) serves as the abutment surface 17d.

In the attaching and detaching mechanism 11B, the upper surface of the inner plug 10 (top wall part 10c) is in abutment with the inner lower surface center part of the outer lid 9 (upper wall part 9b). At this time, the plurality of engagement protruding parts 16a are positioned between adjacent engagement recessed parts 17a in the circumferential direction.

From this state, by rotating the inner plug 10 around the axis toward the engagement side (counterclockwise when viewed from below in the present embodiment) relative to the inner lower surface center part of the outer lid 9, one end side in the circumferential direction of each of the plurality of engagement protruding parts 16a (engaging part 16) is engaged with one of the plurality of engagement recessed parts 17a (engaged parts 17).

Specifically, the tip end side of the engagement tab part 17c, which bends and extends toward one circumferential side, enters the lower side (upper side in FIG. 9(B)) of one end side in the circumferential direction of the engagement protruding part 16a (engaging part 16), and one end side in the circumferential direction of the plurality of engagement protruding parts 16a (engaging part 16) is respectively engaged with the plurality of engagement recessed parts 17a (engaged parts 17). Thereby the inner plug 10 can be detachably attached to the inner lower surface center part of the outer lid 9.

Furthermore, the cap unit 1B of the present embodiment is provided with a retaining mechanism 18B that holds the upper surface of the inner plug 10 (top wall part 10c) in abutment with the inner lower surface center part of the outer lid 9 (upper wall part 9b).

The retaining mechanism 18B has plurality of (four in the present embodiment) plungers 21 arranged in the periphery of the inner lower surface of the outer lid, and a flange part 10d protruding in the radial expansion direction from the outer circumferential part of the upper end side of the aforementioned inner plug 10.

As depicted in FIGS. 13 and 14, the plurality of plungers 21 are attached in a state of being embedded in attachment holes 17f provided on the opposing surface (inner circumferential surface) of the plurality of protruding walls 17e in the outer circumferential direction. Each plunger 21 has a structure in which a ball or pin (a ball in the present embodiment) 21a provided at the inner tip end is biased by a spring 21b provided on the outer circumferential side thereof, while the ball 21a can be pushed in the outer circumferential direction against the bias of the spring 21b. Therefore, each plunger 21 is mounted in a state where the tip end side of the ball 21a protrudes inward beyond the surface of the opposing surface (inner circumferential surface) of the protruding wall 17e and is embedded in the mounting hole 17f.

In the retaining mechanism 18B, a plurality of engagement protruding parts 16a are positioned between adjacent engagement recessed parts 17a in the circumferential direction, and the upper surface of the inner plug 10 (top wall part 10c) is pressed against the inner lower surface of the outer lid 9 (upper wall part 9b).

At this time, the flange part 10d, which is in abutment with the ball 21a of each plunger 21, pushes the ball 21a toward the outer circumferential part against and overcoming the force of the spring 21b, and then the upper surface of the inner plug 10 (top wall part 10c) abuts against the inner lower surface of the outer lid 9 (upper wall part 9b), causing the ball 21a, which is biased by the spring 21b, to again protrude inward beyond the surface of the opposing surface (inner circumferential surface) of the protruding wall 17e.

As a result, the flange part 10d is locked between the inner lower surface of the outer lid 9 and the balls 21a of the plurality of plungers 21. In this manner, the retaining mechanism 18B can hold the upper surface of the inner plug 10 (top wall part 10c) in abutment with the inner lower surface center part of the outer lid 9 (upper wall part 9b) with the center axes of the outer lid 9 and the inner plug 10 aligned.

In the cap unit 1B of the present embodiment having the aforementioned configuration, the outer lid 9 and the inner plug 10 that constitute the cap main body 8 are made to be detachable by the aforementioned attaching and detaching mechanism 11B and retaining mechanism 18B, such that the outer lid 9 and the inner plug 10 can be washed separately, and thus the space between the outer lid 9 and the inner plug 10 can be kept hygienic. Furthermore, the outer lid 9 and the inner plug 10 can be separated, and therefore can be easily dried, and moisture can be easily wiped off.

In addition, the cap unit 1B of the present embodiment has a simplified structure for attaching and detaching the inner plug 10 to the outer lid 9 due to the aforementioned attaching and detaching mechanism 11B and the retaining mechanism 18B, and the cap main body 8 can be easily attached to the container main body 2.

Specifically, when the cap unit 1B is attached to the container main body 2, the inner plug 10 is fitted into the container main body 2 from the upper opening part 2d of the container main body 2. From this state, the outer lid 9 (cap main body 8) is placed on the inner plug 10, and the outer lid 9 (cap main body 8) is rotated in the closing direction (clockwise when viewed from above) relative to the container main body 2.

At this time, in the retaining mechanism 18B, the plurality of engagement protruding parts 16a are positioned between each of the plurality of engagement recessed parts 17a adjacent to each other in the circumferential direction, so that by simply pushing the outer lid 9 toward the inner plug 10, the inner lower surface center part of the outer lid 9 (upper wall part 9b) is abutted against the upper surface of the inner plug 10 (top wall part 10c) that is fitted inward from the upper opening part 2d of the container main body 2. Furthermore, similarly, the aforementioned plurality of plungers 21 maintains a state in which the upper surface of the inner plug 10 is in abutment with the inner lower surface center part of the outer lid 9.

In addition, the flange part 10d of the inner plug 10 pushes the ball 21a toward the outer circumferential part against the force of the spring 21b while overriding the ball 21a, providing a clicking sensation, which enables awareness that the attachment of the inner plug 10 to the outer lid 9 has been completed. In addition, the attachment operation can be performed simply by pressing the inner lower surface center part of the outer lid 9 against the upper surface of the inner plug 10, or by pressing the upper surface of the inner plug 10 against the inner lower surface center part of the outer lid 9. Thereby the operation is simplified to just one action, and use is comfortable. In addition, the attachment position of the inner plug 10 relative to the outer lid 9 does not need to be adjusted, and there is no need to worry about the direction, which enhances convenience.

Furthermore, from a state in which the plurality of engagement protruding parts 16a are positioned between adjacent engagement recessed parts 17a in the circumferential direction, the other end side in the circumferential direction of each engagement protruding part 16a can be made to abut against the abutment surface 17d of the protruding wall 17e by rotating the outer lid 9 (cap main body 8) covering the inner plug 10 in the closing direction (clockwise when viewed from above) relative to the container main body 2.

Furthermore, from this state, each abutment surface 17d can be made to press the other end side in the circumferential direction of each engagement protruding part 16a in the circumferential direction by rotating the outer lid 9 that constitutes the cap main body 8 in the closing direction, thus causing the outer lid 9 and the inner plug 10 to rotate together. As a result, the cap main body 8 is attached to the container main body 2 by screwing the male threaded part 6 into the female threaded part 12, and thus the upper opening part 2d of the container main body 2 can be closed by the cap main body 8 (cap unit 1B).

On the other hand, when removing the cap main body 8 (cap unit 1B) from the container main body 2, the outer lid 9 (cap main body 8) is rotated in the opening direction (counterclockwise when viewed from above) relative to the container main body 2, such that one end side in the circumferential direction of each engagement protruding part 16a is engaged with each engagement recessed part 17a.

From this state, each engagement recessed part 17a can be made to press one end side in the circumferential direction of each engagement protruding part 16a in the circumferential direction by further rotating the outer lid 9 and the inner plug 10 that constitute the cap main body 8 together in the opening direction, causing the outer lid 9 and the inner plug 10 to rotate together. This releases the male threaded part 6 from the female threaded part 12, enabling removal of the cap main body 8 (cap unit 1B) as a unit from the container main body 2, so as to open the upper opening part 2d of the container main body 2.

In addition, in the cap unit 1B of the present embodiment, the aforementioned plurality of plungers 21 keeps the upper surface of the inner plug 10 (top wall part 10c) in abutment with the inner lower surface center part of the outer lid 9 (upper wall part 9b), and furthermore, one end side in the circumferential direction of each engagement protruding part 16a is engaged with each engagement recessed part 17a. Thereby, the inner plug 10 can be prevented from falling off from the outer lid 9 when the cap main body 8 (cap unit 1B) is removed from the container main body 2.

In addition, this cap unit 1B is equivalent to the aforementioned cap unit 1A in terms of how to deal with the situation where the engagement recessed part 17a of the outer lid 9 is unintentionally placed on the engagement protruding part 16a of the inner plug 10, the ability to remove the cap main body 8 (cap unit 1B) from the container main body 2 even when there is negative pressure inside the container main body 2, the ability to improve the design properties of the cap unit 1B, the ability to prevent the shape of the outer lid 9 from distorting, and the ease of removing the outer lid 9 and the inner plug 10.

In addition, similar to the aforementioned cap unit 1A, the male threaded part 6 must be provided on the outer circumferential surface of the container main body 2 and the female threaded part 12 must be provided on the inner circumferential surface of the circumferential wall part 9a of the outer lid 9, and the female threaded part on the inside of the upper opening part 2d of the container main body 2 and the male threaded part on the circumferential wall part 10b of the inner plug 10 cannot be interchanged.

As described above, in the cap unit 1B of the present embodiment, the structure for attaching and detaching the inner plug 10 to the outer lid 9 described above is simplified, and the operation for attaching and detaching the inner plug 10 to the outer lid 9 can be simplified.

Note that for the cap unit 1B of the present embodiment, an example is depicted of a case in which the cap main body 8 is attached to the container main body 2 by rotating the outer lid 9 (cap main body 8) that is later placed on the inner plug 10 in the closing direction relative to the container main body 2, after only the inner plug 10 is fit inside the container main body 2 from the upper opening part 2d of the container main body 2 as described above. Alternatively, the cap main body 8 can be attached to the container main body 2 by first attaching the inner plug 10 to the outer lid 9 using the aforementioned attaching and detaching mechanism 11B and the retaining mechanism 18B, then fitting the inner plug 10 into the inside of the container main body 2 through the upper opening part 2d of the container main body 2, and rotating the outer lid 9 (cap main body 8) in the closing direction relative to the container main body 2.

Moreover, the operation is simple and almost identical to that of the aforementioned cap unit 1A. In other words, the upper surface of the inner plug 10 is pushed to the inner lower surface center part of the outer lid 9 so that the plurality of engagement protruding parts 16a of the inner plug 10 are positioned between adjacent engagement recessed parts 17a of the outer lid 9 in the circumferential direction. Thereby the attachment operation can be performed simply by pushing the inner plug 10 close to the outer lid 9, thus simplifying the operation.

In addition, in the cap unit 1B of the present embodiment, the inner plug 10 is rotated about the axis in the engagement side (counterclockwise when viewed from below) relative to the inner lower surface center part of the outer lid 9 described above, so that one end side in the circumferential direction of each engagement protruding part 16a engages with each engagement recessed part 17a. However, the inner plug 10 may also be rotated about the axis in the opposite direction (clockwise when viewed from below) relative to the inner lower surface center part of the outer lid 9, so that the other end side in the circumferential direction of each engagement protruding part 16a engages with each engagement recessed part 17a.

With this configuration, when removing the cap main body 8 (cap unit 1B) from the container main body 2, the outer lid 9 (cap main body 8) is rotated in the opening direction (counterclockwise when viewed from above) relative to the container main body 2, such that one end side in the circumferential direction of the engagement protruding part 16a abuts against the abutment surface 17e of the protruding wall 17b.

Furthermore, from this state, the abutment surface 17d can be made to press one end side in the circumferential direction of the engagement protruding part 16a in the circumferential direction by further rotating the outer lid 9 and the inner plug 10 that constitute the cap main body 8 together in the opening direction, causing the outer lid 9 and the inner plug 10 to rotate together. As a result, the male threaded part 6 and the female threaded part 12 are disengaged from each other.

Here, the plunger 21 of the retaining mechanism 18B keeps the upper surface of the inner plug 10 (top wall part 10c) in abutment with the inner lower surface center part of the outer lid 9 (upper wall part 9b). Therefore, the cap main body 8 (cap unit 1B) can be removed from the container main body 2 as a unit and the upper opening part 2d of the container main body 2 can be opened.

As described above, with the cap unit 1B of the present embodiment, in addition to the structure that can attach and detach the outer lid 9 and the inner plug 10, the structure for attaching and detaching the inner plug 10 to the outer lid 9 is simplified, the ease of cleaning the outer lid 9 and the inner plug 10 is improved, and the design properties are also improved so that the inner plug 10 is not visible when the cap unit 1B is attached to the container main body 2.

Therefore, a capped container 100B including such a cap unit 1B can be made even easier to use.

### Embodiment 3

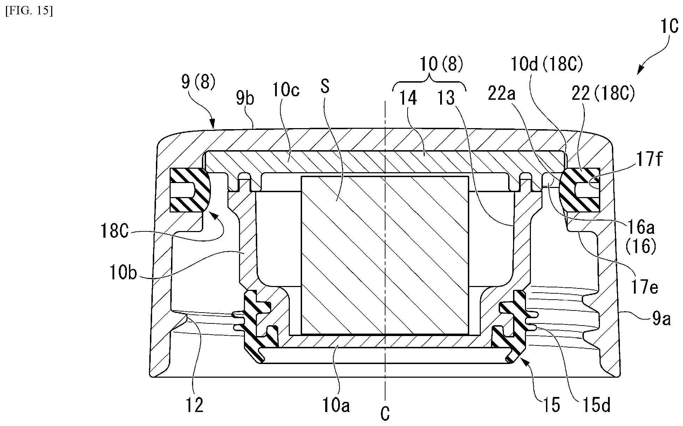

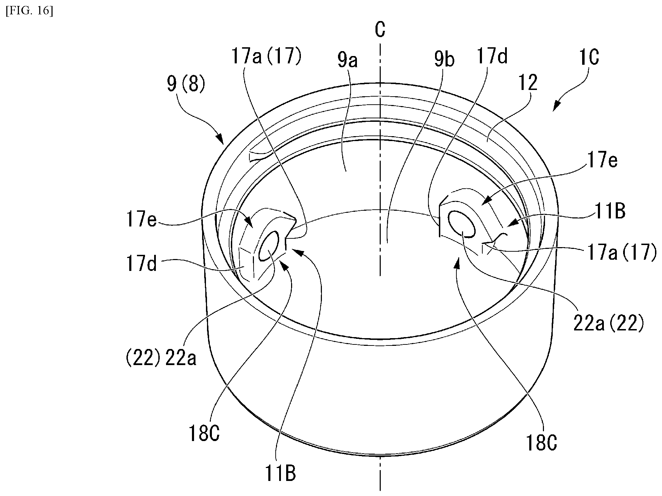

Next, a capped container 100C having the cap unit 1C depicted in, for example, FIGS. 15 and 16 will be described as embodiment 3 of the present invention.

Note that FIG. 15 is a cross-sectional view of the cap unit 1C. FIG. 16 is a perspective view of the outer lid 9 of the cap unit 1C as viewed from the inside. Furthermore, in the following description, the same parts equivalent to the above cap units 1A and 1B shall be omitted and the same symbols shall be used in the drawings.

The cap unit 1C of the present embodiment is detachably attached to the container main body 2 (not depicted) to form a capped container 100C.

Specifically, the cap unit 1C includes the aforementioned attaching and detaching mechanism 11B instead of the aforementioned attaching and detaching mechanism 11A. In addition, instead of the aforementioned attaching and detaching mechanism 11, the cap unit 1C is equipped with a retaining mechanism 18C that keeps the upper surface of the inner plug 10 (top wall part 10c) in abutment against the inner lower surface center part of the outer lid 9 (upper wall part 9b).

The retaining mechanism 18C has a plurality of (four in the present embodiment) elastic members 22 arranged around the inside of the outer lid, and a flange part 10d protruding in the radial expansion direction from the outer circumferential part of the upper end side of the aforementioned inner plug 10. The plurality of elastic members 22 are arranged at equal intervals (each quarter of a circumference) in the circumferential direction of the outer lid 9.

As depicted in FIGS. 15 and 16, the plurality of elastic members 22 are made of a heat-resistant rubber, or an elastomer such as silicone rubber, molded into a cylindrical shape with a top. The plurality of elastic members 22 are attached in a state of being embedded in attachment holes 17f provided on the opposing surface (inner circumferential surface) of the protruding wall 17e in the outer circumferential direction. Furthermore, each elastic member 22 has a structure that allows being pushed toward the outer circumferential part (into the mounting hole 17f) while elastically deforming an elastic protruding part 22a provided at the inner tip end thereof. Therefore, each elastic member 22 is mounted in a state where the elastic protruding part 22a protrudes inward beyond the surface of the opposing surface (inner circumferential surface) of the protruding wall 17e, and is embedded in the mounting hole 17f.

In the retaining mechanism 18C, a plurality of engagement protruding parts 16a are positioned between adjacent engagement recessed parts 17a in the circumferential direction, and the upper surface of the inner plug 10 (top wall part 10c) is pressed against the inner lower surface of the outer lid 9 (upper wall part 9b).

At this time, the flange part 10d abutting against the elastic protruding part 22a of each elastic member 22 overrides while elastically deforming the elastic protruding part 22a toward the outer circumferential part, and then the upper surface of the inner plug 10 (top wall part 10c) abuts against the inner lower surface of the outer lid 9 (upper wall part 9b), causing the elastically restored elastic protruding part 22a to protrude inward past the surface of the opposing surface (inner circumferential surface) of the protruding wall 17e.

As a result, the flange part 10d is locked between the inner lower surface of the outer lid 9 and the plurality of elastic protruding parts 22a of the elastic member 22. In this manner, the retaining mechanism 18C can hold the upper surface of the inner plug 10 (top wall part 10c) in abutment with the inner lower surface center part of the outer lid 9 (upper wall part 9b) with the center axes of the outer lid 9 and the inner plug 10 aligned.

In the cap unit 1C of the present embodiment having the aforementioned configuration, the outer lid 9 and the inner plug 10 that constitute the cap main body 8 are made to be detachable by the aforementioned attaching and detaching mechanism 11B and retaining mechanism 18C, such that the outer lid 9 and the inner plug 10 can be washed separately, and thus the space between the outer lid 9 and the inner plug 10 can be kept hygienic. Furthermore, the outer lid 9 and the inner plug 10 can be separated, and therefore can be easily dried, and moisture can be easily wiped off.

In addition, the cap unit 1C of the present embodiment has a simplified structure for attaching and detaching the inner plug 10 to the outer lid 9 due to the aforementioned attaching and detaching mechanism 11B and the retaining mechanism 18C, and the cap main body 8 can be easily attached to the container main body 2.

Specifically, when the cap unit 1C is attached to the container main body 2, the inner plug 10 is fitted into the container main body 2 from the upper opening part 2d of the container main body 2. From this state, the outer lid 9 (cap main body 8) is placed on the inner plug 10, and the outer lid 9 (cap main body 8) is rotated in the closing direction (clockwise when viewed from above) relative to the container main body 2.

At this time, in the retaining mechanism 18C, the plurality of engagement protruding parts 16a are positioned between each of the plurality of engagement recessed parts 17a adjacent to each other in the circumferential direction, so that by simply pushing the outer lid 9 toward the inner plug 10, the inner lower surface center part of the outer lid 9 (upper wall part 9b) is abutted against the upper surface of the inner plug 10 (top wall part 10c) that is fitted inward from the upper opening part 2d of the container main body 2. Furthermore, similarly, the aforementioned plurality of elastic protruding parts 22a of the elastic member 22 maintain a state in which the upper surface of the inner plug 10 is in abutment with the inner lower surface center part of the outer lid 9.

In addition, the flange part 10d of the inner plug 10 pushes the elastic protruding parts 22a toward the outer circumferential part against the bias of the elastic member 22 while overriding the elastic protruding parts 22a, providing a clicking sensation, which enables awareness that the attachment of the inner plug 10 to the outer lid 9 has been completed. In addition, the attachment operation can be performed simply by pressing the inner lower surface center part of the outer lid 9 against the upper surface of the inner plug 10, or by pressing the upper surface of the inner plug 10 against the inner lower surface center part of the outer lid 9. Thereby the operation is simplified to just one action, and use is comfortable. In addition, the attachment position of the inner plug 10 relative to the outer lid 9 does not need to be adjusted, and there is no need to worry about the direction, which enhances convenience.

Furthermore, from a state in which the plurality of engagement protruding parts 16a are positioned between adjacent engagement recessed parts 17a in the circumferential direction, the other end side in the circumferential direction of each engagement protruding part 16a can be made to abut against the abutment surface 17d of the protruding wall 17e by rotating the outer lid 9 (cap main body 8) covering the inner plug 10 in the closing direction (clockwise when viewed from above) relative to the container main body 2.

Furthermore, from this state, each abutment surface 17d can be made to press the other end side in the circumferential direction of each engagement protruding part 16a in the circumferential direction by rotating the outer lid 9 that constitutes the cap main body 8 in the closing direction, thus causing the outer lid 9 and the inner plug 10 to rotate together. As a result, the cap main body 8 is attached to the container main body 2 by screwing the male threaded part 6 into the female threaded part 12, and thus the upper opening part 2d of the container main body 2 can be closed by the cap main body 8 (cap unit 1C).

On the other hand, when removing the cap main body 8 (cap unit 1C) from the container main body 2, the outer lid 9 (cap main body 8) is rotated in the opening direction (counterclockwise when viewed from above) relative to the container main body 2, such that one end side in the circumferential direction of each engagement protruding part 16a is engaged with each engagement recessed part 17a.

From this state, each engagement recessed part 17a can be made to press one end side in the circumferential direction of each engagement protruding part 16a in the circumferential direction by further rotating the outer lid 9 and the inner plug 10 that constitute the cap main body 8 together in the opening direction, causing the outer lid 9 and the inner plug 10 to rotate together. This releases the male threaded part 6 from the female threaded part 12, enabling removal of the cap main body 8 (cap unit 1C) as a unit from the container main body 2, so as to open the upper opening part 2d of the container main body 2.

In addition, in the cap unit 1C of the present embodiment, the aforementioned plurality of elastic protruding parts 22a of the elastic members 22 keeps the upper surface of the inner plug 10 (top wall part 10c) in abutment with the inner lower surface center part of the outer lid 9 (upper wall part 9b), and furthermore, one end side in the circumferential direction of each engagement protruding part 16a is engaged with each engagement recessed part 17a. Thereby, the inner plug 10 can be prevented from falling off from the outer lid 9 when the cap main body 8 (cap unit 1C) is removed from the container main body 2.

In addition, this cap unit 1C is equivalent to the aforementioned cap units 1A, 1B in terms of how to deal with the situation where the engagement recessed part 17a of the outer lid 9 is unintentionally placed on the engagement protruding part 16a of the inner plug 10, the ability to remove the cap main body 8 (cap unit 1C) from the container main body 2 even when there is negative pressure inside the container main body 2, the ability to improve the design properties of the cap unit 1C, the ability to prevent the shape of the outer lid 9 from distorting, and the ease of removing the outer lid 9 and the inner plug 10.

In addition, similar to the aforementioned cap units 1A, 1B, the male threaded part 6 must be provided on the outer circumferential surface of the container main body 2 and the female threaded part 12 must be provided on the inner circumferential surface of the circumferential wall part 9a of the outer lid 9, and the female threaded part on the inside of the upper opening part 2d of the container main body 2 and the male threaded part on the circumferential wall part 10b of the inner plug 10 cannot be interchanged.

As described above, in the cap unit 1C of the present embodiment, the structure for attaching and detaching the inner plug 10 to the outer lid 9 described above is simplified, and the operation for attaching and detaching the inner plug 10 to the outer lid 9 can be simplified.

Note that for the cap unit 1C of the present embodiment, an example is depicted of a case in which the cap main body 8 is attached to the container main body 2 by rotating the outer lid 9 (cap main body 8) that is later placed on the inner plug 10 in the closing direction relative to the container main body 2, after only the inner plug 10 is fit inside the container main body 2 from the upper opening part 2d of the container main body 2 as described above. Alternatively, the cap main body 8 can be attached to the container main body 2 by first attaching the inner plug 10 to the outer lid 9 using the aforementioned attaching and detaching mechanism 11B and the retaining mechanism 18C, then fitting the inner plug 10 into the inside of the container main body 2 through the upper opening part 2d of the container main body 2, and rotating the outer lid 9 (cap main body 8) in the closing direction relative to the container main body 2.

Moreover, the operation is simple and similar to that of the aforementioned cap unit 1B. In other words, the upper surface of the inner plug 10 is pushed to the inner lower surface center part of the outer lid 9 so that the plurality of engagement protruding parts 16a of the inner plug 10 are positioned between adjacent engagement recessed parts 17a of the outer lid 9 in the circumferential direction. Thereby the attachment operation can be performed simply by pushing the inner plug 10 close to the outer lid 9, thus simplifying the operation.

In addition, in the cap unit 1C of the present embodiment, the inner plug 10 is rotated about the axis in the engagement side (counterclockwise when viewed from below) relative to the inner lower surface center part of the outer lid 9 described above, so that one end side in the circumferential direction of each engagement protruding part 16a engages with each engagement recessed part 17a. However, the inner plug 10 may also be rotated about the axis in the opposite direction (clockwise when viewed from below) relative to the inner lower surface center part of the outer lid 9, so that the other end side in the circumferential direction of each engagement protruding part 16a engages with each engagement recessed part 17a.

With this configuration, when removing the cap main body 8 (cap unit 1C) from the container main body 2, the outer lid 9 (cap main body 8) is rotated in the opening direction (counterclockwise when viewed from above) relative to the container main body 2, such that one end side in the circumferential direction of the engagement protruding part 16a abuts against the abutment surface 17d of the protruding wall 17e that forms the engagement recessed part 17a.

Furthermore, from this state, the abutment surface 17d can be made to press one end side in the circumferential direction of the engagement protruding part 16a in the circumferential direction by further rotating the outer lid 9 and the inner plug 10 that constitute the cap main body 8 together in the opening direction, causing the outer lid 9 and the inner plug 10 to rotate together. As a result, the male threaded part 6 and the female threaded part 12 are disengaged from each other.

Here, the elastic member 22 of the retaining mechanism 18C keeps the upper surface of the inner plug 10 (top wall part 10c) in abutment with the inner lower surface center part of the outer lid 9 (upper wall part 9b). Therefore, the cap main body 8 (cap unit 1C) can be removed from the container main body 2 as a unit and the upper opening part 2d of the container main body 2 can be opened.

As described above, with the cap unit 1C of the present embodiment, in addition to the structure that can attach and detach the outer lid 9 and the inner plug 10, the structure for attaching and detaching the inner plug 10 to the outer lid 9 is simplified, the ease of cleaning the outer lid 9 and the inner plug 10 is improved, and the design properties are also improved so that the inner plug 10 is not visible when the cap unit 1C is attached to the container main body 2.

Therefore, a capped container 100C including such a cap unit 1C can be made even easier to use.

Note that the present invention is not necessarily limited to the above embodiments, and various changes can be made without departing from the purpose of the invention. For example, the aforementioned attaching and detaching mechanisms 11A, 11B are configured such that an engaging part 16 (engagement protruding part 16a) is provided on the inner plug 10 side and an engaged part 17 (engagement recessed part 17a) is provided on the outer lid 9 side, but a configuration in which an engaged part (engagement recessed part) is provided on the inner plug 10 side and an engaging part (engagement protruding part) is provided on the outer lid 9 side may also be used.

In addition, the aforementioned capped containers 100A to 100C are configured to be freely attached and detached to the aforementioned container main body 2 by screwing, thereby directly opening and closing the upper opening part 2d of the container main body 2, but are not necessarily limited to such a configuration. For example, the cap units 1A to 1C can be detachably attached by screwing to a shoulder member attached to the container main body 2.

In addition, the aforementioned retaining mechanisms 18B, 18C are configured such that a flange part 10d is provided on the inner plug 10 side and a plunger 21 or an elastic member 22 (elastic protruding part 22a) is provided on the outer lid 9 side, but a configuration in which a plunger or an elastic member (elastic protruding part) is provided on the inner plug 10 side and a flange part is provided on the outer lid 9 side may also be used.

Note that the above embodiment depicts an application where the present invention is applied to a beverage container having a heat maintaining function (or a cold maintaining function) provided by the container main body 2 having the aforementioned vacuum insulation structure, but the present invention can be widely applied to a container with a lid having a container main body and a lid body that can be freely attached and detached to the container main body.

### DESCRIPTION OF CODES

### DESCRIPTION OF THE REFERENCE NUMERALS

1A-1C. Cap unit; 2. Container main body; 3. Outer container; 4. Inner container; 5. Vacuum insulation layer; 6. Male threaded part; 7. Protruding part; 8. Cap main body; 9. Outer lid; 10. Inner plug; 11A, 11B. Attaching and detaching mechanism; 12. Female threaded part; 13. Lower plug member; 14. Upper plug member; 15. Watertight packing; 16. Engaging part; 16a. Engagement protruding part; 17. Engaged part; 17a. Engagement recessed part; 18A, 18B, 18C. Retaining mechanism; 19. First magnet; 20. Second magnet; 2I. Plunger; 22. Elastic member; 22a. Elastic protruding part; 100A-100C. Capped container.

## Claims

1. A cap unit detachably attached to a container main body that is open at an upper part and has a male threaded part on an outer circumferential surface, wherein
a cap main body is provided to close an upper opening part of the container main body;
the cap main body includes:
an outer lid having a female threaded part on an inner circumferential part, and that is attached to the container main body in a state that covers the upper opening part by screwing the male threaded part and the female threaded part together;
an inner plug that fits inside the container main body from the upper opening part; and
an attaching and detaching mechanism for removably attaching the inner plug to the inner lower surface of the outer lid;
the attaching and detaching mechanism having an engaging part provided on either one of the outer lid or the inner plug, and an engaged part provided on the other, and the inner plug being removably attached to the inner lower surface of the outer lid by engaging the engaging part with the engaged part.

2. The cap unit according to claim 1, wherein the attaching and detaching mechanism is in a condition where the engaging part engages with the engaged part by rotating the inner plug about an axis relative to the inner lower surface of the outer lid.

3. The cap unit according to claim 1, wherein the engaging part includes a plurality of engagement recessed parts provided in the periphery of the inner lower surface of the outer lid, the engaged part includes a plurality of engagement protruding parts provided on the outer circumferential part of the inner plug, and the inner plug is attached to the outer lid by engaging the engagement protruding parts with the engagement recessed parts.

4. The cap unit according to claim 1, further comprising a retaining mechanism for retaining a state where an upper surface of the inner plug is in abutment with the inner lower surface of the outer lid.

5. The cap unit according to claim 4, wherein
the retaining mechanism includes a magnet provided on one of the outer lid and the inner plug, and a magnet or a magnetic body provided on the other; and
the upper surface of the inner plug is kept in a state of contact with the inner lower surface of the outer lid by a magnetic attraction force acting between the outer lid and the inner plug.

6. The cap unit according to claim 4, wherein the retaining mechanism includes a plurality of plungers provided in the periphery of the inner lower surface of the outer lid, and a flange part protruding in a radial expansion direction from an outer circumferential part on an upper end side of the inner plug; and
the flange part is engaged between the inner lower surface of the outer lid and the plurality of plungers, thereby maintaining the upper surface of the inner plug in contact against the inner lower surface of the outer lid.

7. The cap unit according to claim 4, wherein the retaining mechanism includes a plurality of elastic protruding parts provided in the periphery of the inner lower surface of the outer lid, and a flange part protruding in a radial expansion direction from an outer circumferential part of an upper end side of the inner plug; and
the elastic protruding part is engaged between the inner lower surface of the outer lid and the plurality of plungers, thereby maintaining the upper surface of the inner plug in contact against the inner lower surface of the outer lid.

8. A capped container comprising:
the cap unit according to any one of claims 1 to 7; and
a container main body to which the cap unit is attached.
